# EUROPEAN PATENT APPLICATION

(11) **EP 4 357 123 A1**
(43) Date of publication of application: **24.04.2024**
(21) Application number: 23198504.5
(22) Date of filing: 20.09.2023
(51) Int. Cl.: B32B 1/08, B32B 5/02, B32B 27/08, B32B 27/12, B32B 27/28, B32B 27/32, F16L 11/04

(54) **USE OF A POLYOLEFIN TO PROVIDE A MULTILAYER TUBE COMPRISING AT LEAST ONE LAYER IN SILICONE, AND A MULTILAYER TUBE COMPRISING A LAYER IN SILICONE**

(30) Priority: 18.10.2022 IT 202200021387
(71) Applicant: Tubigomma Deregibus S.r.l., 35030 Saccolongo (PD) (IT)
(72) Inventor: DEREGIBUS, Andrea, 35142 PADOVA (IT)
(74) Representative: Modiano, Micaela Nadia

(57) **Abstract**

Use of a polyolefin as is to provide a multilayer tube (10, 110, 210, 310, 410) by way of tape wrapping/extrusion, in which at least the layer in contact with the polyolefin is made of silicone.

## Description

The present invention relates to the use of a polyolefin to provide a multilayer tube that comprises at least one layer in silicone, and a multilayer tube that comprises a layer in silicone.

The invention is used particularly in the pharmaceutical sector in the field of multilayer tubes, for chemical fluids.

However, it can also be used in other sectors such as the food sector.

Such tubes are used in machines and in other applications where a connecting element is required that is flexible and suitable for contact with products of chemical/pharmaceutical type or the like.

In the pharmaceutical sector, these tubes are generally multilayer and are made with at least one layer in silicone.

Normally these tubes are constituted by an inner layer, a tubular sheath which defines the passage duct for the fluid, and one or more outer layers overlaid on the inner layer and integrated with it.

In general, the outer layers can comprise textile reinforcements, which add resistance to pressure, and elastomers and metallic or plastic spiral coils for reinforcement and protection, which are adapted to prevent the collapse of the tube when it is bent.

Such conventional techniques have a number of drawbacks.

In fact, the layer in silicone has a permeable structure that means it has a high friction coefficient, with consequent difficulty in movement/sliding and/or cleaning.

Furthermore, silicone has a low resistance to chemical agents, to abrasion and/or to tearing, the latter caused, for example, by operations to connect different portions of tube.

To partially overcome these problems, multilayer tubes are known which have an outer layer made of silicone and an inner layer, coupled to the outer layer, which is made of fluorinated polymers, such as PTFE (polytetrafluoroethylene) which is usually white or at least partially transparent.

This conventional technique too has a number of aspects that show room for improvement.

In fact PTFE is an appreciably expensive material.

Furthermore, PTFE is not chemically compatible with silicone and, for it to be bonded with the latter, it requires a preliminary operation of hardening.

This leads to a process for producing the tube that is long and inconvenient, as well as a considerably high overall cost of the tube itself.

Furthermore, the hardening necessary for associating PTFE and silicone reduces or eliminates the overall transparency of the tube.

The aim of the present invention is to improve the known art in one or more of the above-mentioned aspects.

Within this aim, an object of the invention is to provide a multilayer tube that has a lower porosity and a lower friction coefficient with respect to similar, conventional multilayer tubes made of silicone.

Another object of the invention is to provide a multilayer tube that has a greater resistance to chemical agents, to abrasion and/or to tearing, with respect to similar, conventional multilayer tubes made of silicone.

A further object of the invention is to provide a multilayer tube that has a layer made of a material with performance levels that are comparable to those of PTFE in terms of: resistance to abrasion/tearing/chemical agents, friction coefficient and porosity, but with lower costs of material and production with respect to a similar multilayer tube with a layer made of PTFE.

A further object of the invention is to provide a multilayer tube that has a layer made of a material with performance levels that are comparable to those of PTFE in terms of resistance to abrasion/tearing/chemical agents, friction coefficient, and porosity, but which allows a production process that is faster and simpler than that for a similar multilayer tube with a layer in PTFE.

Furthermore, another object of the present invention is to overcome the drawbacks of the known art in an alternative manner to any existing solutions.

This aim and these and other objects which will become better apparent hereinafter are achieved by the use of a polyolefin as is to provide a multilayer tube by way of tape wrapping/extrusion, in which at least the layer in contact with said polyolefin is made of silicone.

This aim and these and other objects which will become more apparent hereinafter are achieved by a multilayer tube, comprising a first layer made of silicone and a second layer coupled to said first layer, said multilayer tube being characterized in that said second layer is made of polyethylene.

Further characteristics and advantages of the invention will become better apparent from the description of some preferred, but not exclusive, embodiments of a multilayer tube according to the present invention, which are illustrated by way of non-limiting example in the accompanying drawings wherein:
- Figure 1 is a cross-sectional view of a multilayer tube, according to the invention, in a first embodiment;
- Figure 2 is a schematic perspective view of the multilayer tube of Figure 1;
- Figure 3 is a schematic perspective view of a multilayer tube, according to the invention, in a second embodiment;
- Figure 4 is a schematic perspective view of a multilayer tube, according to the invention, in a third embodiment;
- Figure 5 is a schematic perspective view of a multilayer tube, according to the invention, in a fourth embodiment;
- Figure 6 is a schematic perspective view of a multilayer tube, according to the invention, in a fifth embodiment.

With reference to the figures, a multilayer tube according to the invention, in a first embodiment, is generally designated by the reference numeral 10.

The multilayer tube 10 comprises a first layer 11 made of silicone 13.

One of the peculiarities of the invention consists in that the multilayer tube 10 comprises a second layer 12 made of polyolefin.

Such polyolefin is used as is to provide the multilayer tube 10 by way of tape wrapping, with the first layer 11 in contact with the polyolefin in silicone 12.

In other embodiments not shown in the figures, the polyolefin is used as is to provide the multilayer tube by way of extrusion, again with the first layer in contact with the polyolefin in silicone.

Advantageously both the polyolefin of the second layer 12 and the silicone of the first layer 11 are selectively extruded or tape wrapped.

Advantageously, such polyolefin of the second layer 12 is made of polyethylene 14, preferably of UHMWPE (Ultra High Molecular Weight Poly-Ethylene).

In other embodiments, the second layer 12 can be made with other types of polyethylene, such as for example XLPE, HDPE, LDPE, LLDPE, VLDPE.

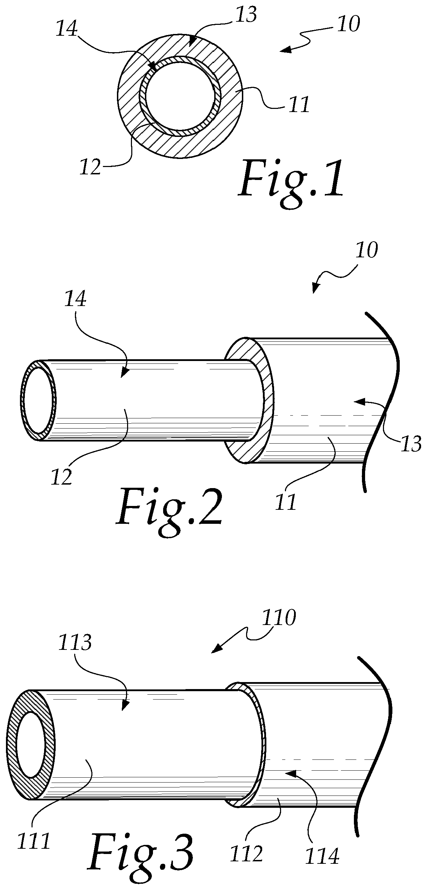

In particular, in the first embodiment, shown in Figure 1 and 2, the first layer 11 is outside the second layer 12 and surrounds it, and the second layer 12 constitutes the tubular sheath which defines the passage duct for the fluid of the multilayer tube 10.

Specifically, the silicone 13 of the layer that adheres to the polyolefin is a platinum-catalyzed or peroxide-catalyzed silicone of the HCR self-adhesive type for glass bonding.

It should be noted that UHMWPE is chemically compatible with this type of silicone 13 and it is possible to associate these two materials without the need for hardening the UHMWPE, as would happen for a similar multilayer tube made of silicone and PTFE.

The multilayer tube according to the invention is provided by way of tape wrapping of a band of UHMWPE and the subsequent (or simultaneous) tape wrapping or extrusion of a band of silicone on a rigid spindle.

Then the whole is vulcanized at a temperature higher than the melting temperature of the polyolefin, and in the order of 150°C.

During the step of vulcanization the UHMWPE, which has a melting temperature of approximately 136°C, melts, thus adhering and becoming heat-sealed to the layer in silicone.

In particular, the additives added in the formulation of the silicone 13 enable a chemical/mechanical grip on the carbon-hydrogen groups of the polyolefin.

UHMWPE has performance levels that are comparable with those of PTFE in terms of resistance to abrasion/tearing/chemical agents, friction coefficient, and porosity, but is appreciably of lower cost.

Furthermore UHMWPE does not require a hardening operation in order to be capable of adhering to silicone, and this enables a process for making the multilayer tube that is easier, faster and cheaper than that for a similar multilayer tube in silicone and PTFE.

Also, since hardening is not necessary for the UHMWPE to adhere to the silicone, it is possible to obtain a tube with a greater transparency than that of a similar multilayer tube in silicone and PTFE.

It should also be noted that the mesh of the molecular weave of the polyolefin, being more compact than that of silicone, which by contrast is permeable, effectively provides a protective barrier for the latter.

Figure 3 is a schematic perspective view of a second embodiment of a multilayer tube according to the invention, indicated with the reference numeral 110.

Similarly to the first embodiment, the multilayer tube 110 comprises a first layer 111 in silicone 113 and a second layer 112 in UHMWPE 114, coupled to the first layer 111.

In such embodiment, the second layer 112 is outside the first layer 111 and surrounds it, and the first layer 111 constitutes the tubular sheath which defines the passage duct for the fluid of the multilayer tube 110.

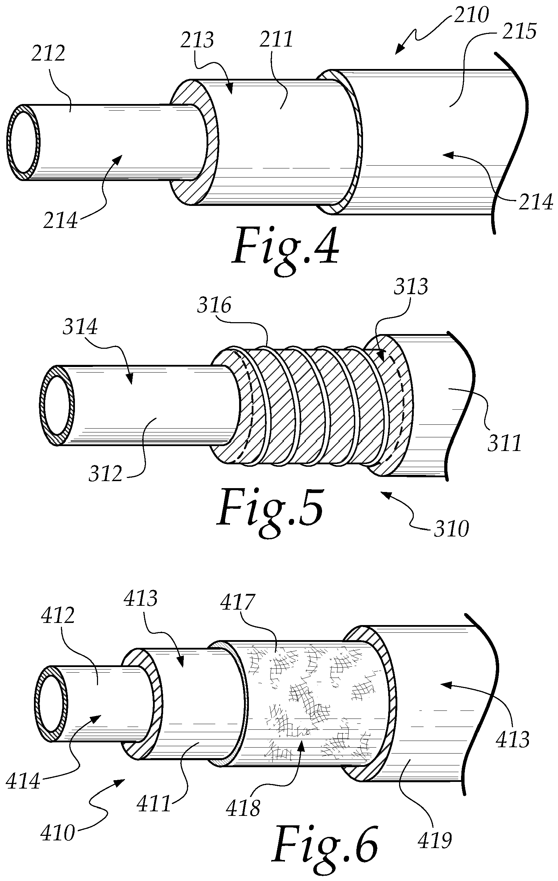

Figure 4 is a schematic perspective view of a third embodiment of a multilayer tube according to the invention, indicated with the reference numeral 210.

Similarly to the embodiments illustrated above, the multilayer tube 210 comprises a first layer 211 in silicone 213 and a second layer 212 in UHMWPE 214, coupled to the first layer 211.

The first layer 211 is outside the second layer 212 and surrounds it.

The multilayer tube 210 also comprises a third layer 215 in UHMWPE 214, which is outside the first layer 211 and surrounds the latter.

The third layer 215 is coupled to the first layer 211.

In another embodiment shown in Figure 5, the multilayer tube 310 comprises a first layer 311 in silicone 313 and a second layer 312 in UHMWPE 314, coupled to the first layer 311.

The first layer 311 is outside the second layer 212 and surrounds it.

The multilayer tube 310 comprises a spiral coil 316 which surrounds the second layer 312, and is embedded in the first layer 311.

In particular the spiral coil 316 is made of a metallic and/or thermoplastic material.

In a further embodiment, not shown in the figures, a multilayer tube according to the invention comprises:
- a first layer in silicone,
- a second layer in UHMWPE on the outside of the first layer in silicone, surrounding the latter, and coupled thereto,
- a spiral coil embedded in the first layer.

In a further embodiment, not shown in the figures, a multilayer tube according to the invention comprises:
- a first layer in silicone,
- a second layer in UHMWPE on the inside of the first layer in silicone, surrounded by the latter, and coupled thereto,
- a spiral coil embedded in the first layer,
- a third layer in UHMWPE on the outside of the first layer in silicone, surrounding the latter, and coupled thereto.

In the further embodiment shown in Figure 6, the multilayer tube 410, according to the invention, comprises a first layer 411 in silicone 413, and a second layer 412 in UHMWPE 414, inside the first layer 411, surrounded by the latter and coupled to said first layer 411.

The multilayer tube 410 also comprises:
- a fourth layer 417, made of fabric 418, on the outside of the first layer 411, surrounding the latter and coupled thereto,
- a fifth layer 419 in silicone 413, on the outside of the fourth layer 417, surrounding the latter and coupled thereto.

In other embodiments, not shown in the figures, a multilayer tube according to the invention can comprise more than one layer of fabric interposed between layers of silicone and/or UHMWPE and/or other thermoplastic materials, optionally with the interposition of layers of fabric and/or spiral coils.

In further embodiments, not shown in the figures, a multilayer tube according to the invention comprises a layer of polyolefin interposed between two layers in silicone or, also, an internal layer in PTFE, an intermediate layer in silicone and an outer, covering layer in polyolefin.

In practice it has been found that the invention fully achieves the intended aim and objects by providing a multilayer tube that has a lower porosity and a lower friction coefficient with respect to similar, conventional multilayer tubes made of silicone.

A multilayer tube according to the invention has been devised that has a greater resistance to chemical agents, to abrasion and/or to tearing, with respect to similar, conventional multilayer tubes made of silicone.

Furthermore, with the invention a multilayer tube has been provided that has a layer made of a material with performance levels that are comparable to those of PTFE in terms of: resistance to abrasion/tearing/chemical agents, friction coefficient and porosity, and with lower costs of material and production with respect to a similar multilayer tube with a layer made of PTFE.

Also, with the invention a multilayer tube has been devised that has a layer made of a material with performance levels that are comparable to those of PTFE in terms of resistance to abrasion/tearing/chemical agents, friction coefficient, and porosity, and which allows a production process that is faster and simpler than that for a similar multilayer tube with a layer in PTFE.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102022000021387 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. Use of a polyolefin as is to provide a multilayer tube (10, 110, 210, 310, 410) by way of tape wrapping/extrusion, in which at least the layer in contact with said polyolefin is made of silicone.

2. The use of a polyolefin according to claim 1, **characterized in that** both said polyolefin and said silicone are selectively extruded or tape wrapped.

3. The use of a polyolefin according to claim 1 or 2, **characterized in that** said polyolefin is polyethylene.

4. The use of a polyolefin according to claim 1 or 2, **characterized in that** said polyolefin is UHMWPE.

5. A multilayer tube (10, 110, 210, 310, 410), comprising a first layer (11, 111, 211, 311, 411) made of silicone (13, 113, 213, 313, 413) and a second layer (12, 112, 212, 312, 412) coupled to said first layer (11, 111, 211, 311, 411), said multilayer tube (10, 110, 210, 310, 410) being **characterized in that** said second layer (12, 112, 212, 312, 412) is made of polyethylene (14, 114, 214, 314, 414).

6. The multilayer tube (10, 110, 210, 310, 410) according to the preceding claim, **characterized in that** said second layer (12, 112, 212, 312, 412) is made of UHMWPE.

7. The multilayer tube (10, 110, 210, 310, 410) according to claim 5 or 6, **characterized in that** said silicone (13, 113, 213, 313, 413) of said first layer (11, 111, 211, 311, 411) is a platinum-catalyzed or peroxide-catalyzed silicone of the HCR self-adhesive type for glass bonding.

8. The multilayer tube (10, 210, 310, 410) according to one of claims 5 to 7, **characterized in that** said first layer (11, 211, 311, 411) is on the outside of said second layer (12, 212, 312, 412) and surrounds it.

9. The multilayer tube (210) according to the preceding claim, **characterized in that** it comprises a third layer (215) made of UHMWPE (214) on the outside of said first layer (211) and surrounding the latter, said third layer (215) being coupled to said first layer (211).

10. The multilayer tube (110) according to one of claims 5 to 7, **characterized in that** said second layer (112) is on the outside of said first layer (111) and surrounds it.

11. The multilayer tube (110) according to any one of claims 5 to 10, **characterized in that** it comprises a spiral coil (316) embedded in said first layer (311).

12. The multilayer tube (410) according to any one of claims 5 to 11, **characterized in that** it comprises a fourth layer (417) made of fabric (418).
